# EUROPEAN PATENT APPLICATION

(11) **EP 3 715 164 A1**
(43) Date of publication of application: **30.09.2020**
(21) Application number: 19165107.4
(22) Date of filing: 26.03.2019
(51) Int. Cl.: B60K 35/00, B60K 37/06, G06F 3/0481, G06F 3/0482, G06F 3/0484, G06F 3/0486, B60K 37/02

(54) **VEHICLE ADAPTIVE INSTRUMENT CLUSTER AND METHOD AND COMPUTER SYSTEM FOR ADJUSTING SAME**

(71) Applicant: Alpine Electronics, Inc., Tokyo 145-0067 (JP)
(72) Inventor: Dubuc, Alberto, 70567 Stuttgart (DE)
(74) Representative: Schmitt-Nilson Schraud Waibel Wohlfrom Patentanwälte Partnerschaft mbB

(57) **Abstract**

A method of adjusting an adaptive instrument cluster (10) comprising a display device (11) disposed within an instrument panel of a vehicle (1) comprises providing a plurality (70) of visual instrument elements (71-7n), each of the visual instrument elements (71-7n) configured to provide vehicle operating information during operation of the vehicle (1), a layout area (51) for disposing at least one of the visual instrument elements (71-7n) to be displayed on the display device (11), and an interface (32) for a user which is configured to provide a first control element (60) for the user to select a number of the visual instrument elements (71-7n) for disposition into the layout area (51), a second control element (50) to dispose the selected ones of the visual instrument elements (71-7n) within the layout area (51), and a third control element (50) to configure at least one of geometric shape and graphical appearance of at least part of the layout area (51). A visual configuration (VC) of the layout area (51) is provided based on the selected ones of the visual instrument elements (71-7n) disposed in the layout area (51) and the configured geometric shape and/or graphical appearance of at least part of the layout area (51) to the adaptive instrument cluster (10) for displaying the selected ones of the visual instrument elements (71-7n) on the display device (11) based on the visual configuration of the layout area (51).

## Description

The present invention relates to a method and a computer system for adjusting an adaptive instrument cluster comprising a display device disposed within an instrument panel of a vehicle, a computer program product comprising software code sections which are adapted to perform such method, and to a vehicle adaptive instrument cluster.

Various vehicles, such as automobiles, like passenger cars or trucks, are designed to provide various information to the user or driver. Most vehicles have an instrument cluster that includes instruments configured to provide vehicle operating information during operation of the vehicle, like analog or digital instrument elements, such as speedometer, tachometer, coolant and oil temperature, oil pressure, fuel, electrical system gauges, gear selection, lateral acceleration, and the like positioned in the driver's view in an instrument panel of the vehicle behind the steering wheel or somewhere in the dashboard. In this position, the driver is able to observe the instruments and vehicle operating information during driving activity. In modern vehicles, instrument elements may also be provided as depictions of instrument elements on a display device, like a screen within the instrument panel, herein generally referred to as visual instrument elements. Such display device is typically integrated in a so-called Digital Instrument Clusters (DIC), which are meanwhile widespread among modern automobiles like passenger cars. The graphical depiction of the visual instrument elements may be, e.g., "analog" or "digital" to imitate conventional analog or digital instrument elements in various forms.

Nowadays digital instrument clusters for vehicles are often composed of fully customizable GUI (Graphical User Interface) components, thus forming an adaptive digital instrument cluster, or simply adaptive instrument cluster. The components, like the visual instrument elements, are graphical elements configured to provide vehicle operating information during operation of the vehicle (like speed/tachometer gauges, fuel, motor temp, etc). Of course, such components are designed and operated to follow common security and industry standards. Normally, the appearance of these components is fixed, wherein the user cannot modify their appearances. That may cause problems, e.g. if the user (driver) feels uncomfortable with the appearances and/or positions of the visual instrument elements from his or her perspective in the driver's seat such that the positions and/or the appearances are not optimal in order for the user to gather information more quickly and/or for the elements to be more clearly visible for the user behind the steering wheel. This may in some instances reduce safety during driving.

JP 5136947 B2 provides an operating device for a vehicle operating a lot of in-vehicle instrument functions by an operation part arranged on a steering wheel of a vehicle. The operating device for a vehicle comprises a plurality of operation parts disposed to the right and left of the steering wheel, and travelling state detection means detecting a vehicle travelling state. A main control part allots any one of a plurality of functions to be operated uniquely determined for each of a plurality of travelling state sections exclusively recognized each other to the operation parts, to be switched depending on the detected travelling state.

It is an object of the present invention to provide a method of adjusting an adaptive instrument cluster which is capable of increasing driving safety by means of an adaptive instrument cluster which can be better adjusted at least to some extent to the user's needs.

The invention relates to a method of adjusting an adaptive instrument cluster comprising a display device disposed within an instrument panel of a vehicle, and to a computer program product comprising software code sections which are adapted to perform such method according to the appended claims. The invention further relates to a computer system and vehicle adaptive instrument cluster according to the appended claims. Embodiments are disclosed in the dependent claims.

According to an aspect, there is disclosed a method of adjusting an adaptive instrument cluster comprising a display device disposed within an instrument panel of a vehicle, the method comprising:
providing a plurality of visual instrument elements, each of the visual instrument elements configured to provide vehicle operating information during operation of the vehicle,
providing a layout area for disposing at least one of the visual instrument elements to be displayed on the display device,
providing an interface for a user of the vehicle, wherein the interface is configured to provide a first control element for the user to select a number of the visual instrument elements from the plurality of visual instrument elements for disposition into the layout area, to provide a second control element for the user to dispose the selected ones of the visual instrument elements within the layout area, and to provide a third control element for the user to configure at least one of geometric shape and graphical appearance of at least part of the layout area, and
providing a visual configuration of the layout area based on the selected ones of the visual instrument elements disposed in the layout area and the configured at least one of geometric shape and graphical appearance of at least part of the layout area to the adaptive instrument cluster for displaying the selected ones of the visual instrument elements on the display device based on the visual configuration of the layout area.

The method and computer system for adjusting an adaptive instrument cluster of a vehicle according to aspects of the invention are thus capable of increasing driving safety, since by means of the method and computer system the adaptive instrument cluster can be better adjusted at least to some extent to the user's needs. For example, the method and computer system may provide a flexible way to personalize the vehicle's adaptive instrument cluster, such as in the user's own car, in a similar way like the user may personalize his or her computer desktop, tablet or smartphone screen according to his or her needs and personal requirements. For instance, the user may use such method in the form of a computer program by means of which the user of the vehicle could change the arrangement, position and/or appearance of the visual instrument elements, for example outside the vehicle, according to his or her needs, for example so that the visual instrument elements are clearly visible from the user's perspective in the vehicle, and after completion of the task, the user may save it as a set or "theme" or the like in the vehicle, on the computer system, or on a remote server computer.

According to another aspect, there is provided a computer system comprised in or configured to be coupled with an adaptive instrument cluster of a vehicle and configured to adjust the adaptive instrument cluster, comprising a processing device coupled to a memory having instructions stored thereon which, when executed by the processing device, are configured:
to provide a plurality of visual instrument elements, each of the visual instrument elements configured to provide vehicle operating information during operation of the vehicle,
to provide a layout area for disposing at least one of the visual instrument elements to be displayed on the display device,
to provide an interface for a user of the vehicle, wherein the interface is configured to provide a first control element for the user to select a number of the visual instrument elements from the plurality of visual instrument elements for disposition into the layout area, to provide a second control element for the user to dispose the selected ones of the visual instrument elements within the layout area, and to provide a third control element for the user to configure at least one of geometric shape and graphical appearance of at least part of the layout area, and
to provide a visual configuration of the layout area based on the selected ones of the visual instrument elements disposed in the layout area and the configured at least one of geometric shape and graphical appearance of at least part of the layout area to the adaptive instrument cluster for displaying the selected ones of the visual instrument elements on the display device based on the visual configuration of the layout area.

According to another aspect, the invention also relates to a computer program product comprising software code sections which are adapted to perform a method as described herein when loaded into a memory of a computer system which is comprised in or configured to be coupled with an adaptive instrument cluster of a vehicle.

In particular, such computer system, computer program product and method may be implemented, in principle, in any processing device on the vehicle or outside the vehicle, such as on a personal computer, a tablet or a smartphone, which is appropriate to perform the respective function. Such processing device may be, for example, implemented in, or part of, a processor of an ECU (electronic control unit) of the vehicle, or may be a separate component (e.g. coupled to the CAN-Bus of the vehicle through wire or wirelessly), or a microprocessor implemented in a computer system, such as on a personal computer, a tablet or a smartphone, or may be a distributed system using one or more processors. The computer program may be stored on a computer readable medium, e.g. on the vehicle, or on a memory to be coupled with, or loaded into, a computer system.

Any aspects and embodiments described herein with respect to the method can equally or analogously be employed in the computer system as described herein, and vice versa, with the processing device and memory configured (by software and/or hardware) appropriately. The functions performed by the processing device may be implemented in hardware and/or in software.

The present invention can be used, in principle, in connection with any type of vehicle, preferably in a car (automobile) of common type, which has an adaptive instrument cluster

According to an embodiment, the first control element is configured to provide a graphical interface for graphically presenting the plurality of visual instrument elements to the user for selecting the number of the visual instrument elements from the plurality of visual instrument elements. Such graphical interface allows an easy selection of the visual instrument elements.

According to an embodiment, the second control element is configured to provide a graphical interface for graphically presenting the layout area to the user and editing by the user for disposition of the selected ones of the visual instrument elements within the layout area. Such graphical interface allows an easy disposition of the selected ones of the visual instrument elements.

According to an embodiment, the third control element is configured to provide a graphical interface for configuration of at least one of the geometric shape and graphical appearance of at least part of the layout area by user input. Such graphical interface allows an easy configuration of the geometric shape and/or the graphical appearance.

According to an embodiment, the visual configuration of the layout area is not provided to the adaptive instrument cluster until at least one predetermined visual instrument element has been selected from the plurality of visual instrument elements and disposed within the layout area.

For example, the adaptive digital instrument cluster (DIC) may have some interfaces that allows the user to some degree of configuration, but not all of the visual instrument elements inside the DIC and counterparts in the plurality of visual instrument elements, from which the user may select from, could be fully configurable given security concerns or standards in the respective field concerned. For example, a basic DIC must have at least the speedometer, a fuel supply/State of Charge gauge and alarm signals of diagnosis, since these instrument elements are needed for security reasons. This kind of components could not be avoided and should always be visible. The method and system according to aspects of the present invention prevents the elimination and/or hiding of these visual instrument elements. Nevertheless, these components could be configurable by themselves, e.g. in form, color and type of reading, like a gauge, numbers or bars, or even combinations of it.

According to an embodiment, the at least one predetermined visual instrument element is at least one of a visual instrument element indicative of vehicle speed, a visual instrument element indicative of energy supply of the vehicle, and one or more visual instrument elements indicative of diagnostic alarm concerning operation of the vehicle.

According to an embodiment, the interface is configured to provide a fourth control element for the user to select the at least one of the visual instrument elements from a plurality of different graphical theme groups having respective different graphical appearances. As such, the user my select any predefined appearances, which the user may change and/or position on the layout area according to his or her preferences.

According to an embodiment, the interface is configured to provide a fifth control element for the user to change at least one of geometric shape and graphical appearance of at least one of the selected visual instrument elements. Thus, the respective selected visual instrument element in itself may be changed and adapted by the user as well.

According to an embodiment, the interface is configured to provide a sixth control element for the user to initiate a transmission of the provided visual configuration of the layout area to a server computer remote from the vehicle through a communications network, particularly the Internet. The server computer may serve for storing in a user profile a respective selection and layout of visual instrument elements as a visual configuration for use in any type of vehicle having a DIC appropriate for being adjusted according to such stored visual configuration of instrument elements.

According to an embodiment, the method further comprises initiating transmission of a stored visual configuration of a group of visual instrument elements associated with the user from a server computer remote from the vehicle through a communications network, particularly the Internet, to the adaptive instrument cluster for displaying on the display device based on the stored visual configuration, particularly upon recognizing an ID of the user by a processing device of the vehicle. For instance, when the user enters the vehicle, the DIC will query for the visual configuration related with the User ID associated with the user, and the visual configuration, e.g. downloaded from a server computer, will be applied in the DIC of the vehicle the user has just entered.

According to an embodiment, at least one of the first to sixth control elements comprises a respective graphical tab displayed on a user interface display area, which preferably allows for easy operation by the user.

According to another aspect, there is disclosed a vehicle adaptive instrument cluster comprising a display device for disposing within an instrument panel of the vehicle and at least one control device coupled to the display device. The control device is configured to be coupled with a computer system performing a method as described herein for receiving the visual configuration of the layout area from the computer system. The control device is configured to display the selected ones of the visual instrument elements on the display device based on the visual configuration of the layout area, which has previously been configured by the user.

According to an embodiment, the control device is comprised in at least one of the following: the vehicle chassis, the adaptive instrument cluster, the display device, and/or a navigation system located in the vehicle. Such control device may be, for example, implemented in form of, or part of, a processor of an ECU or a HU (head unit) of the vehicle, or may be a separate component (e.g. coupled to the Ethernet-Bus or CAN-Bus of the vehicle), or may be a distributed system using one or more processors and integrated circuits in or outside the vehicle.

Aspects of the invention and embodiments will now be described with reference to the following Figures, in which
- Fig. 1: depicts a schematic view of a vehicle including an adaptive instrument cluster according to an embodiment of the invention,
- Fig. 2: depicts an adaptive instrument cluster mounted on or at a dashboard of a vehicle according to an embodiment of the invention showing an exemplary selection of visual instrument elements,
- Fig. 3: is a schematic block diagram of an adaptive instrument cluster coupled to a remote server via the Internet according to an embodiment of the invention,
- Fig. 4: is a schematic block diagram of a computer system for performing a method according to an embodiment of the invention coupleable to a remote server and an adaptive instrument cluster of a vehicle via the Internet according to an embodiment of the invention,
- Fig. 5: shows a schematic tool box and layout area as displayed on a computer system for selecting and arranging selected visual instrument elements on the layout area for adjusting an adaptive instrument cluster according to an embodiment of the invention.

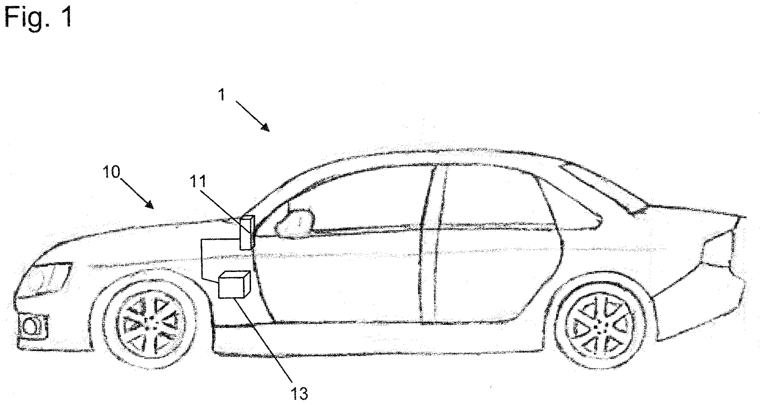

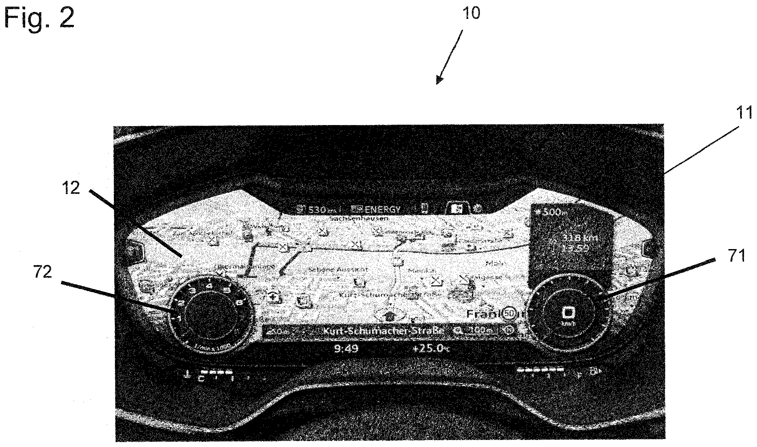

Fig. 1 depicts a schematic view of a vehicle 1 including an adaptive instrument cluster 10 according to an embodiment of the invention. In this regard, Fig. 2 depicts an example of such adaptive instrument cluster 10 mounted on or at a dashboard of the vehicle 1, wherein Fig. 2 shows an exemplary selection of visual instrument elements 71, 72 used in the instrument cluster 10. The adaptive instrument cluster 10 comprises a display device 11 disposed within an instrument panel of a vehicle 1, as commonly used in various forms in conventional vehicles.

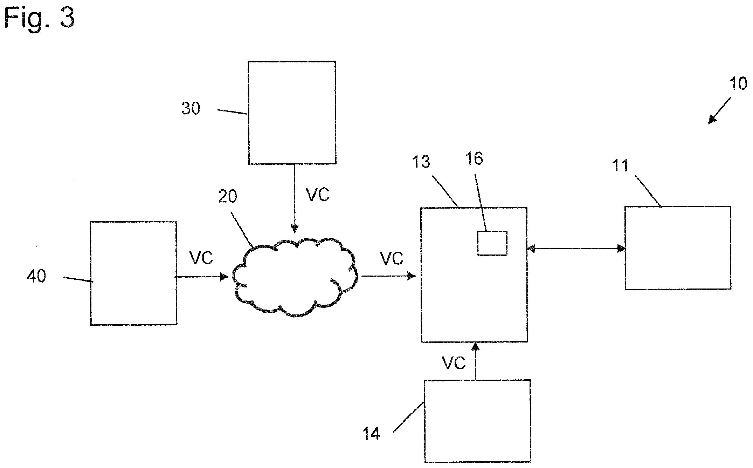

Particularly, Fig. 2 graphically depicts an adaptive instrument cluster 10 (in the following briefly referred to as "cluster") disposed within an instrument panel of the vehicle 1, wherein the cluster 10 may be disposed behind a steering wheel (not shown), which is used in a conventional manner to control the direction of travel of the vehicle 1. The cluster 10 includes at least one display device 11, e.g. coupled to a display controller, e.g. comprised in a control device 13 of the vehicle as shown in Fig. 3. The display device 11 may be a light emitting diode (LED), organic LED (OLED), liquid crystal (LCD) or any suitable electronic display device that permits the depiction of one or more visual instrument elements, e.g., visual instrument elements 71, 72, of the vehicle 1. As used herein, the term visual instrument element is meant to refer to the depiction of one or more instruments on a display device which is configured to provide vehicle operating information during operation of the vehicle. For example, the visual instrument elements may be a collection of depictions of instruments, such as a speedometer, a tachometer, one or more engine parameters such as coolant and/or oil temperature, oil pressure, fuel supply, electric system charging status (both may be referred to as: energy supply), selected gear indication, lateral acceleration indication, and the like. The display device 11 and its display area 12 showing the various elements may be partitionable, and it may be configured and reconfigured during operation of the vehicle 1 via the control device 13.

According to Fig. 3, in a potential use configuration the control device 13, which may comprise one or more microprocessors 16 as commonly used in, e.g., vehicle ECUs, or HUs, is coupled with the display device 11, e.g., in wired manner or wirelessly. Other suitable wired and/or wireless configurations and connections between these components are also possible. For example, in a distributed system, the control device 13 may also comprise or be connected with a so-called Cloud-Server 40, which is a remote server computer somewhere outside the vehicle 1, for example coupled through a communications network 20 like the Internet with the ECU and/or HU of the vehicle 1, respectively, and to which certain processing or calculation procedures can be outsourced, or from which visual cluster configurations may be received. Therefore, according to embodiments of the invention, the adaptive instrument cluster 10 may be a fully or partially vehicle integrated device. Other visual cluster configurations may be stored, e.g. on a memory 14 coupled to the control device 13.

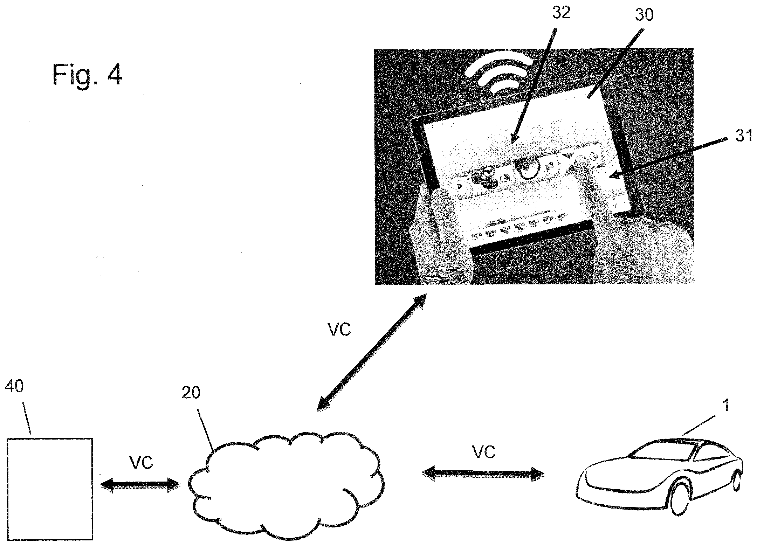

Fig. 4 shows a schematic block diagram of a computer system for performing a method according to an embodiment of the invention and which is coupleable to a remote server and an adaptive instrument cluster of a vehicle via a communications network, such as the Internet, according to an embodiment of the invention. For example, the computer system 30 may be a mobile computer system, such as a laptop computer, a tablet (as shown), a wearable, or a smartphone as commonly used in the art. The computer system 30, which comprises a processing device 31 (not explicitly shown), such as a microprocessor as commonly known, coupled to a memory (not shown), may have installed thereon a computer program product, such as a so-called App, which is a software application running on the computer system 30, providing a user interface 32, such as a graphical user interface, for performing the method as described herein. The computer program product comprises software code sections, such as established by a Software Development Kit (SDK), which are adapted to perform the method as described herein.

According to aspects of the invention, a method or program is provided that the user of a vehicle can use and by means of which can change a configuration and appearance of components of a digital instrument cluster of the vehicle. For example, the method may be performed outside the vehicle, such as on the computer system 30 (e.g. a tablet computer) at any appropriate place. After the user has finished the visual configuration of "his" or "her" adaptive digital instrument cluster, the visual configuration VC may be sent, such as via a communications network 20 like the Internet, to the vehicle 1 and stored thereon, e.g., on the memory 14 coupled to the control device 13. According to another variant, the visual configuration VC may be sent via the communications network 20 to a remote server computer 40, such as a so-called cloud server where various users may store respective visual configurations to be used in one or more respective cars. For example, a user may store his or her preferred visual configuration VC on the server computer 40, so that the visual configuration may be used in his or her own car, but also in a rental car, for example, in case the user uses such car and if the respective car is equipped with an appropriate adaptive instrument cluster. To this end, the respective visual configuration VC is transmitted from the server computer 40 via the communications network 20 to the respective vehicle 1 concerned. For example, the control device 13 on the vehicle 1 provides an App, e.g. on the screen of the head unit, providing a user interface with which the user can select the server computer 40 and initiate transmission to the vehicle 1. According to another embodiment, the user uses the App on the computer system 30 to initiate and control the transmission of the respective visual configuration VC from the server computer 40 to the vehicle 1.

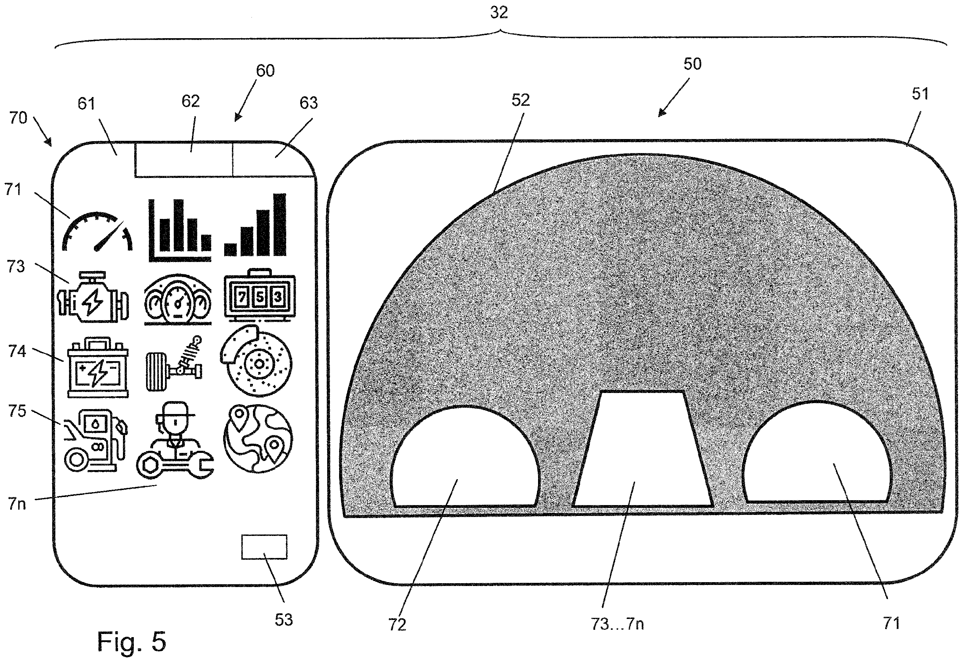

Fig. 5 is a schematic depiction which shows an exemplary tool box and layout area as displayed on an interface 32 of a computer system 30 according to Fig. 4 for configuring and adjusting a visual configuration of an adaptive instrument cluster of a vehicle, such as shown in Fig. 2, according to an embodiment of the invention. In principle, the tool box and layout area may be implemented on an interface provided by any appropriate computer system, such as the computer system 30 or the control device 13 of the vehicle 1 itself. The program which is performed by the respective computer system is configured to provide - in a so-called tool box provided on a graphical tab 61 - a plurality 70 of visual instrument elements 71-7n, wherein each of the visual instrument elements 71-7n is configured to provide vehicle operating information during operation of the vehicle 1, as explained above. Further, program is configured to provide a layout area 51 for disposing at least one of the visual instrument elements 71-7n to be displayed on the display device 11 of the respective adaptive visual instrument cluster 10, such as the one shown in Fig. 2.

According to an embodiment, the tool box provides different visual instrument elements 71-7n which may be inserted on the cluster layout. For example, each visual instrument element 71-7n is or comprises a configurable digital or analog instrument element ("digital" and "analog" referring to the respective graphical animation), like the following elements (which are only some examples): speedometer 71 (analog or digital), tachometer, motor status 73, battery status 74, fuel supply 75 or state of charge (SoC) (for electrical vehicles), commonly designated energy supply, diagnosis 7n, suspension settings, etc. For example, the plurality 70 of visual instrument elements 71-7n includes one or more of digital and analog gauges ("digital" and "analog" referring to the respective graphical animation).

For instance, analog gauges could be implemented in some basic shapes, normally designed according to safety standards. Digital gauges could be implemented as normal alphanumeric text or numbers. Some gauges could be implemented more advanced, like a speed vs. time Gauge, or revolution vs. time. 2D display of even 3D animated displays are also possible, e.g. if there are more than one gauge in a graphic. As such, the visual instrument elements 71-7n in the SDK, in principle, correspond to, or are counterparts of, the respective instrument elements available and configurable in the adaptive instrument cluster 10.

According to a further embodiment, multiple tool box tabs, such as graphical tabs 61, 62 63 may be provided. For example, the instrument elements 71-7n are shown in different graphical animations in the respective tab 61, 62 or 63. The respective tool box tab could expand the functionality of the tool box, like a tab for different graphical "themes" or "skins" for the graphic components. The respective tabs 61, 62 or 63 provide a respective control element for the user to select at least one of the visual instrument elements 71-7n from a plurality of different graphical theme groups having respective different graphical appearances. According to another embodiment, another tab could be used for displaying various configuration parameters of one or more of the visual instrument elements.

The interface 32 further provides a layout area 51, for example for configuring a main layout of a display area 12 of the adaptive instrument cluster 10. The layout area 51 is a kind of graphical template or surface for positioning components thereon and may implement certain properties and/or limits imposed by the display area 12 or configuration capabilities (such as colors, contrast, brightness, etc. of the elements to be displayed) of the corresponding adaptive instrument cluster 10 in the respective vehicle 1. As such, according to certain embodiments, the layout area 51 maps or reflects the display area 12 of the adaptive instrument cluster 10 regarding, e.g., geometric dimensions, graphical capabilities and limits, and number, position and arrangement of respective visual instrument elements to be disposed. For example, a limit imposed by the corresponding adaptive instrument cluster 10 may be a border 52 inside of which the visual instrument elements should be arranged as the display device 11 and its display area 12 of the adaptive instrument cluster 10 has a certain size reflected by the border 52. Any visual instrument element 71-7n arranged on the layout area 51 within the border 52 will be correspondingly arranged and visually displayed on the display device 11 of the adaptive instrument cluster 10 in a respective display area 12, e.g. as shown in Fig. 2.

Furthermore, the interface 32 provides one or more control elements for the user, such as a graphical interface 60 for graphically presenting the plurality 70 of visual instrument elements 71-7n to the user and configured with the one or more tabs 61 to 63, for selecting a number of the visual instrument elements 71-7n from the plurality 70 of visual instrument elements for disposition into the layout area 51. For example, the control element 60 may allow selection of the respective element 71-7n by clicking on the respective element with the mouse or finger, as commonly known in the art in various forms for selection of elements on a graphical display. Further, the interface 32 provides a control element 50 for the user, such as the layout area 51, border 52 and control mechanisms associated therewith, to dispose the selected ones of the visual instrument elements 71-7n within the layout area 51. Particularly, the control element 50 comprises a graphical interface for graphically presenting the layout area 51 to the user and editing by the user for disposition of the selected ones of the visual instrument elements 71-7n within the layout area 51. For example, the control element 50 may allow selection of the respective element 71-7n and moving into the layout area 51 by clicking on the respective element 71-7n and dragging it into the layout area 51 (so-called "drag and drop", commonly known in the art).

In addition, the control element 50 may further include control means for the user to configure at least one of geometric shape and graphical appearance of at least part of the layout area 51. For example, the control element 50 may allow the selection of a particular appearance of the layout area 51 with its elements disposed therein, such as color and/or brightness, through common control elements selectable through a menu displayed on the layout area 51, for example. As such, the control element 50 provides a graphical interface for configuration of at least one of the geometric shape and graphical appearance of at least part of the layout area 51 by user input.

An example of a potential visual configuration arranged on the layout area 51 for transmission to an adaptive digital instrument cluster 10 of a vehicle 1 is shown in Fig. 5. The example represents three placed visual instrument elements, namely two analog instrument elements 71 and 72 (like the ones shown in Fig. 2) and one digital instrument element, like one or more of the diagnostic warning displays 73 to 7n,, here displayed with trapezoidal form. Advantageously, the computer system may not save any visual configuration of the layout area 51 in the memory and/or on the server computer 40 that has not at least a speedometer, a fuel gauge/SoC, and some space to display one or more diagnostics alarms. That is, the visual configuration VC of the layout area 51 is not provided by the computer system 30 to the adaptive instrument cluster 10 until at least one predetermined visual instrument element, here the speedometer 71, fuel gauge/SoC 75, and one or more diagnostics alarms 73 or 7n, has been selected from the plurality 70 of visual instrument elements and disposed within the layout area 51.

After finishing the configuration process by the user, the computer system 30 provides the configured visual configuration VC of the layout area 51 based on the selected ones of the visual instrument elements 71-7n disposed in the layout area 51 and based on the configured geometric shape and/or graphical appearance of at least part of the layout area 51 to the respective adaptive instrument cluster 10, e.g. via the Internet 20, for displaying the selected ones of the visual instrument elements 71-7n on its display device 11 based on the visual configuration VC of the layout area 51.

According to a preferred implementation, the interface 32 provides a further control element for the user, such as in a tab 63, to change at least one of geometric shape and graphical appearance of at least one of the selected visual instrument elements 71-7n itself. For example, the user may change the appearance of the speedometer from analog (as selectable from tab 61) to digital (selectable from tab 63), or from color blue (selectable from tab 61) to red (selectable from tab 63), or from a small size (selectable from tab 61) to a big size (selectable from tab 63), etc.

According to an embodiment, the interface 32 provides a further control element for the user, such as a button 53 displayed on the display screen, which allows initiating a transmission of the finished visual configuration VC of the layout area 51 to the server computer 40 and/or adaptive instrument cluster 10 through the Internet 20. For example, when the user presses the button 53, the configured visual configuration VC is saved in the memory of the computer system 30 and transmitted to the server computer 40 and/or adaptive instrument cluster 10.

Likewise, a control element, such as button 53, may be presented on the display device of the computer system 30 for initiating transmission of a stored visual configuration VC of a group of visual instrument elements 71-7n associated with the user (e.g. associated with a user ID) from the server computer 40 through the Internet 20 to the adaptive instrument cluster 10 for displaying selected ones of the visual instrument elements 71-7n on its display device 11 based on the stored visual configuration VC. This may also be initiated, for example, upon recognizing an ID of the user by the processing device 16 of the vehicle 1, e.g. when entering the car, e.g. automatically upon recognizing a user ID.

Accordingly, the control device 13 of the vehicle 1 is configured to be coupled with the computer system 30 via the Internet 20 for receiving the visual configuration VC of the layout area 51, either directly from the computer system 30, or from the server computer 40. The control device 13 then displays the selected ones of the visual instrument elements 71-7n on the display device 11 based on the transmitted visual configuration VC.

In general, according to embodiments, the adaptive instrument cluster should have one or more interfaces that allow the user some degree of configuration. However, not all visual instrument elements of the adaptive instrument cluster and its counterparts in the SDK may be fully configurable given security concerns and standards, as set out above. For example, a basic digital instrument cluster should have at least a speedometer, a fuel supply/State of Charge gauge and elements for alarm signals of diagnosis, wherein these components are needed for security reasons. This kind of components could not be avoided and should always be visible. For example, the configuration program may not allow the elimination and/or hiding of these visual instrument elements. On the other hand, these visual instrument elements may be configurable in form, color and/or type of reading, like a gauge, numbers or bars, or even combinations of it.

The configuration program for the adaptive instrument cluster itself should be a user friendly application. It could be installed on, e.g., laptop computers, tablets or smartphones, and the personalized visual instrument elements could be seen like "objects" in a toolbox. Preferably, the user has the option of saving his or her personalization configuration on a cloud service, and to be linked with the car key, in the way that when the user enters the car, the adaptive instrument cluster (or respective control device) will recognize the key and retrieve the user's visual configuration from the cloud, and apply it to the adaptive instrument cluster accordingly.

If the size of the display device of the respective adaptive instrument cluster varies among two or more vehicles, such as two or more vehicles of a car sharing or rental car service, the configuration program is advantageously adjustable automatically based on the display size of each vehicle with keeping some required visual instrument elements for safety standard reasons. Basically, required visual instrument elements may keep their size to a certain extent, whereas other visual instrument elements may change their size or delete themselves following a predetermined priority sequence.

The above detailed description is merely exemplary in nature and is not intended to limit the application and uses. It should be understood that throughout the drawings, corresponding reference numerals indicate like or corresponding parts and features. As used herein, the term system or device may refer to any combination or collection of mechanical and electrical hardware, software, firmware, electronic control component, processing logic, and/or processor device, individually or in any combination, including an electronic circuit, a processor (shared, dedicated, or group), memory that executes one or more software or firmware programs, and/or other suitable components that provide the described functionality.

## Claims

1. A method of adjusting an adaptive instrument cluster (10) comprising a display device (11) disposed within an instrument panel of a vehicle (1), the method comprising:
- providing a plurality (70) of visual instrument elements (71-7n), each of the visual instrument elements (71-7n) configured to provide vehicle operating information during operation of the vehicle (1),
- providing a layout area (51) for disposing at least one of the visual instrument elements (71-7n) to be displayed on the display device (11),
- providing an interface (32) for a user of the vehicle (1), wherein the interface (32) is configured to provide a first control element (60) for the user to select a number of the visual instrument elements (71-7n) from the plurality (70) of visual instrument elements for disposition into the layout area (51), to provide a second control element (50) for the user to dispose the selected ones of the visual instrument elements (71-7n) within the layout area (51), and to provide a third control element (50) for the user to configure at least one of geometric shape and graphical appearance of at least part of the layout area (51), and
- providing a visual configuration (VC) of the layout area (51) based on the selected ones of the visual instrument elements (71-7n) disposed in the layout area (51) and the configured at least one of geometric shape and graphical appearance of at least part of the layout area (51) to the adaptive instrument cluster (10) for displaying the selected ones of the visual instrument elements (71-7n) on the display device (11) based on the visual configuration (VC) of the layout area (51).

2. The method according to claim 1, wherein the first control element is configured to provide a graphical interface (60) for graphically presenting the plurality (70) of visual instrument elements (71-7n) to the user for selecting the number of the visual instrument elements (71-7n) from the plurality (70) of visual instrument elements (71-7n).

3. The method according to claim 1 or 2, wherein the second control element is configured to provide a graphical interface (50) for graphically presenting the layout area (51) to the user and editing by the user for disposition of the selected ones of the visual instrument elements (71-7n) within the layout area (51).

4. The method according to one of claims 1 to 3, wherein the third control element is configured to provide a graphical interface (50) for configuration of at least one of the geometric shape and graphical appearance of at least part of the layout area (51) by user input.

5. The method according to one of claims 1 to 4, wherein the visual configuration (VC) of the layout area (51) is not provided to the adaptive instrument cluster (10) until at least one predetermined visual instrument element (71, 73) has been selected from the plurality (70) of visual instrument elements and disposed within the layout area (51).

6. The method according to claim 5, wherein the at least one predetermined visual instrument element is at least one of a visual instrument element (71) indicative of vehicle speed, a visual instrument element indicative of energy supply (75) of the vehicle, and one or more visual instrument elements (73, 74) indicative of diagnostic alarm concerning operation of the vehicle (1).

7. The method according to one of claims 1 to 6, wherein the interface (32) is configured to provide a fourth control element (61, 62) for the user to select the at least one of the visual instrument elements (71-7n) from a plurality of different graphical theme groups having respective different graphical appearances.

8. The method according to one of claims 1 to 7, wherein the interface (32) is configured to provide a fifth control element (63) for the user to change at least one of geometric shape and graphical appearance of at least one of the selected visual instrument elements (71-7n).

9. The method according to one of claims 1 to 8, wherein the plurality (70) of visual instrument elements (71-7n) includes at least one of digital and analog gauges.

10. The method according to one of claims 1 to 9, wherein the interface (32) is configured to provide a sixth control element (53) for the user to initiate a transmission of the provided visual configuration (VC) of the layout area (51) to a server computer (40) remote from the vehicle (1) through a communications network (20), particularly the Internet.

11. The method according to one of claims 1 to 10, further comprising initiating transmission of a stored visual configuration (VC) of a group of visual instrument elements (71-7n) associated with the user from a server computer (40) remote from the vehicle (1) through a communications network (20), particularly the Internet, to the adaptive instrument cluster (10) for displaying the group of visual instrument elements (71-7n) on the display device (11) based on the stored visual configuration (VC), particularly upon recognizing an ID of the user by a processing device (16) of the vehicle (1).

12. The method according to one of claims 1 to 11, wherein at least one of the first to sixth control elements comprises a respective graphical tab displayed on a user interface display area.

13. A computer program product comprising software code sections which are adapted to perform a method according to one of the preceding claims when loaded into a memory of a computer system (30) which is comprised in or configured to be coupled with an adaptive instrument cluster (10) of a vehicle (1).

14. A computer system (30) comprised in or configured to be coupled with an adaptive instrument cluster (10) of a vehicle (1) and configured to adjust the adaptive instrument cluster (10), comprising a processing device (31) coupled to a memory having instructions stored thereon which, when executed by the processing device (31), are configured:
- to provide a plurality (70) of visual instrument elements (71-7n), each of the visual instrument elements (71-7n) configured to provide vehicle operating information during operation of the vehicle (1),
- to provide a layout area (51) for disposing at least one of the visual instrument elements (71-7n) to be displayed on the display device (11),
- to provide an interface (32) for a user of the vehicle (1), wherein the interface (32) is configured to provide a first control element (60) for the user to select a number of the visual instrument elements (71-7n) from the plurality (70) of visual instrument elements for disposition into the layout area (51), to provide a second control element (50) for the user to dispose the selected ones of the visual instrument elements (71-7n) within the layout area (51), and to provide a third control element (50) for the user to configure at least one of geometric shape and graphical appearance of at least part of the layout area (51), and
- to provide a visual configuration (VC) of the layout area (51) based on the selected ones of the visual instrument elements (71-7n) disposed in the layout area (51) and the configured at least one of geometric shape and graphical appearance of at least part of the layout area (51) to the adaptive instrument cluster (10) for displaying the selected ones of the visual instrument elements (71-7n) on the display device (11) based on the visual configuration (VC) of the layout area (51).

15. A vehicle adaptive instrument cluster (10) comprising a display device (11) for disposing within an instrument panel of the vehicle (1) and at least one control device (13) coupled to the display device (11), wherein the control device (13) is configured to be coupled with a computer system (30) according to claim 14 for receiving the visual configuration (VC) of the layout area (51) from the computer system (30) and is configured to display the selected ones of the visual instrument elements (71-7n) on the display device (11) based on the visual configuration of the layout area (51).
